# EUROPEAN PATENT APPLICATION

(11) **EP 1 884 419 A1**
(43) Date of publication of application: **06.02.2008**
(21) Application number: 06822232.2
(22) Date of filing: 25.10.2006
(51) Int. Cl.: B60R 22/12

(54) **TONGUE PLATE STOPPER AND SEATBELT DEVICE USING THE SAME**

(30) Priority: 18.11.2005 JP 2005333626
(71) Applicant: TAKATA CORPORATION, Minato-ku, Tokyo 106-8510 (JP)
(72) Inventor: GOMI, Seiji, Tokyo 106-8510 (JP); TOMIOKA, Hideki, Tokyo 106-8510 (JP); SHIMAZAKI, Sadayuki, Tokyo 106-8510 (JP)
(74) Representative: Vossius & Partner
(86) International application number: PCT/JP2006/321255
(87) International publication number: WO 2007/058059

(57) **Abstract**

A first member (10) provided with pins (12), (15) that penetrate through a seat belt webbing (30), and a second member (20) provided with holes (22), (25) to which the pins (12), (15), which have penetrated through the seat belt webbing (30), penetrate are provided, and a plurality of the pins (12), (15) are penetrated through a plurality of the respectively corresponding holes (22), (25), and the seat belt webbing (30) is sandwiched by the first member (10) and the second member (20) from both sides.

## Description

### Technical Field

The present invention relates to a technical field of a seat belt apparatus attached to a motor vehicle seat for restraining and protecting an occupant in emergency situations, and more specifically to a technical field of a tongue plate stopper attached to seat belt webbing of a seat belt apparatus for preventing a tongue plate from dropping off at a time of nonuse of a seat belt.

### Background Art

For example, a seat belt apparatus attached to a motor vehicle seat of an automobile or the like is configured to protect an occupant by means of restraining the occupant that tends to be moved by inertia, by means of a seat belt in emergency situations when large motor vehicle deceleration occurs, such as a motor vehicle collision, or the like. In such a seat belt apparatus, a tongue plate stopper attached to seat belt webbing, for preventing a tongue plate from dropping off at a time of nonuse of the seat belt is provided.

As an example of a tongue plate stopper of a hitherto known seat belt, a tongue plate stopper provided with a male member where one protruding portion that penetrates seat belt webbing for use in restraining the occupant in a wall thickness direction is provided, and a female member where a reception hole to which the protruding portion penetrated from the webbing is fitted into is provided is known (refer to, for example, the patent document 1).

In the tongue plate stopper disclosed in the patent document 1, since the webbing is sandwiched between both the female and male members and a moving amount of a tongue plate is thereby limited, it becomes possible to attach the tongue plate stopper at an appropriate position in a longitudinal direction of the webbing corresponding to a change of a body type of the occupant and a driving posture thereof, and an appropriate webbing-wearing condition can be applied to the occupant.

On the other hand, as another example of the tongue plate stopper of the hitherto known seat belt, a tongue plate stopper including a first board element where a pin penetrating webbing is protruded at a center of a face-of-board at a webbing side, and a second board element having a fitting portion where the pin is fitted into the center of the face-of-board at the webbing side is provided, in which a plurality of protrusions are protruded at predetermined intervals in a peripheral direction on the face-of-board at the webbing side of the board element of one side, and grooves corresponding to the protrusions are provided in a peripheral direction on the face-of-board at the webbing side of the board element of the other side, and which a tip end of the protrusion is engageable with the groove, is known (for example, refer to the patent document 2).

In the tongue plate stopper disclosed in the patent document 2, since a plurality of protrusions are disposed at predetermined intervals, and the tip end of the protrusion is engaged into the groove, attaching strength of the tongue plate stopper to the webbing can be configured to be extremely high.
[Patent Document 1] Japanese Unexamined Utility Model Registration Application Publication No. 56-23147
[Patent Document 1] Japanese Unexamined Patent Application Publication No. 5-81242

### Disclosure of the Invention

### Problems to be Solved by the Invention

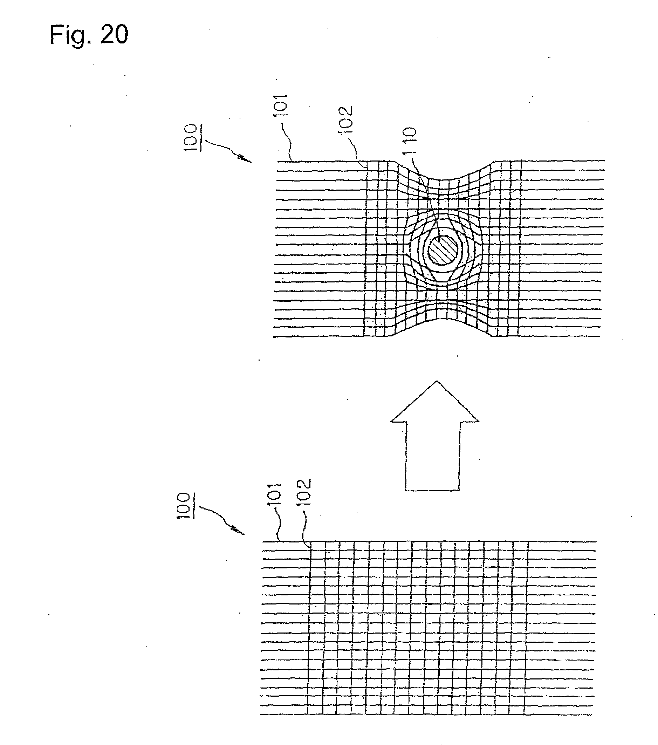

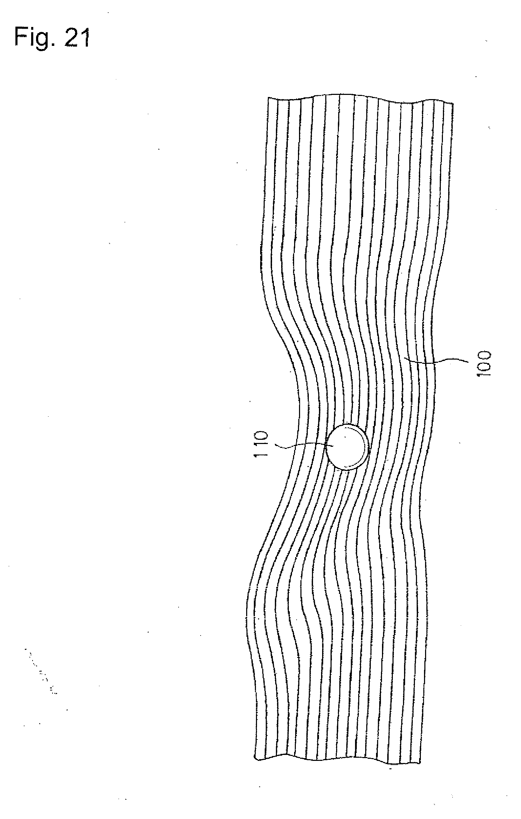

However, in the tongue plate stoppers disclosed in the patent document 1 and the patent document 2, a warp and a weft are expanded when the protruding portion of the tongue plate stopper penetrates the seat belt webbing, as shown in Fig. 20, and thereby the seat belt webbing is tightened in both a longitudinal direction and a width direction, resulting in generating constriction. Further, a corrugating phenomenon occurs in the seat belt webbing as a whole, as shown in Fig. 21, resulting in bad exterior appearance.

The present invention is made in light of the above-described circumstances, and an object is to provide a tongue plate stopper for use in a seat belt and a seat belt apparatus using the same capable of eliminating a hollow and the corrugating phenomenon generated by mounting the hitherto known tongue plate stopper.

### Means for Solving the Problems

To solve the above-described problems, a tongue plate stopper for use in a seat belt according to Claim 1 with respect to the present invention is characterized in that a tongue plate stopper for preventing a tongue plate from dropping off up to a bottom at a time of nonuse of the seat belt includes a first member including a pin penetrating a seat belt webbing, and a second member including a hole through which the pin penetrated through the seat belt webbing is penetrated, in which a plurality of the pins are penetrated through a plurality of the holes being respectively corresponding thereto, and in which the seat belt webbing is sandwiched by the first member and the second member from both sides thereof.

Further, the tongue plate stopper for use in the seat belt according to Claim 2 with respect to the present invention is characterized in that a cross-section of the pin is formed to be a round shape.

Furthermore, the tongue plate stopper for use in the seat belt according to Claim 3 with respect to the present invention is characterized in that a cross-section of the pin is formed to be an ellipse.

Moreover, the tongue plate stopper for use in the seat belt according to Claim 4 with respect to the present invention is characterized in that the pin includes a pin having a round shaped cross-section at an inside in a width direction of the seat belt webbing, and a pin having an elliptically shaped cross-section at an outside.

Further, the tongue plate stopper for use in the seat belt according to Claim 5 with respect to the present invention is characterized in that the pin includes a pin having a diameter smaller than a diameter of a cross-section of an inside pin, at the outside in the width direction of the seat belt webbing.

Further, a seat belt apparatus according to Claim 6 with respect to the present invention is characterized in that in a seat belt apparatus including at least a seat belt for restraining an occupant in emergency, a seat belt retractor for retracting the seat belt, a guide anchor for use in the seat belt, guiding the seat belt pulled out from the seat belt retractor to a shoulder of the occupant, a tongue plate slidably supported by the seat belt being guided from the guide anchor for use in the seat belt, a buckle in which the tongue plate is disengageably inserted and engaged, and a tongue plate stopper for preventing the tongue plate from dropping off up to a bottom at a time of nonuse of the seat belt, the tongue plate stopper for use in the seat belt is the tongue plate stopper for use in seat belt according to any one of Claims 1 through 5.

### Advantages

According to a tongue plate stopper for use in a seat belt with respect to the present invention constructed as described above, since a first member having a pin penetrating a seat belt webbing, and a second member having a hole through which the pin penetrated through the aforementioned seat belt webbing is penetrated are provided, and a plurality of the aforementioned pins are penetrated through a plurality of the aforementioned holes respectively corresponding thereto, and the aforementioned seat belt webbing is sandwiched by the aforementioned first member and the aforementioned second member from both sides thereof, the seat belt webbing is brought to a state to be entirely constricted in a longitudinal direction, there is no possibility that a corrugating phenomenon occurs. Further, as for a weft, although the weft is brought to a state to have a constricted length by each pin, similarly to a case of a warp, a hollow is suppressed not to become large . This is because the constriction in a width direction of the aforementioned weft gets balanced out in the vicinity of an end portion in a width direction of the seat belt webbing by the warp being expanded in a width direction by the pin.

Further, since the aforementioned plurality of pins includes a pin having a small diameter at an outside, and a deformation of the warp and the weft at the outside is brought to be small, the number and the disposition can more minutely be set. Therefore, the hollow is particularly suppressed not to become large, and there is no possibility that a corrugating phenomenon occurs.

### Brief Description of the Drawings

[Fig. 1] Fig. 1 is a view schematically showing an example according to an embodiment of a seat belt apparatus provided with a tongue plate stopper for use in a seat belt with respect to the present invention.
[Fig. 2] Fig. 2 is a plan view schematically showing an example according to the embodiment of a first member of the tongue plate stopper for use in the seat belt with respect to the present invention.
[Fig. 3] Fig. 3 is a cross-section taken along a line A-A of the embodiment of the first member of the tongue plate stopper for use in the seat belt with respect to the present invention.
[Fig. 4] Fig. 4 is a plan view schematically showing an example according to the embodiment of the second member of the tongue plate stopper for use in the seat belt with respect to the present invention.
[Fig. 5] Fig. 5 is a cross-section taken along a line B-B of the embodiment of the second member of the tongue plate stopper for use in the seat belt with respect to the present invention.
[Fig. 6] Fig. 6 is a view showing a condition of each of pins and a seat belt webbing when mounting the tongue plate stopper for use in the seat belt with respect to the present invention.
[Fig. 7] Fig. 7 is a view showing a tongue plate stopper for use in a seat belt according to another embodiment.
[Fig. 8] Fig. 8 is a view showing a tongue plate stopper for use in a seat belt according to another embodiment.
[Fig. 9] Fig. 9 is a view showing a tongue plate stopper for use in a seat belt according to another embodiment.
[Fig. 10] Fig. 10 is a view showing a tongue plate stopper for use in a seat belt according to another embodiment.
[Fig. 11] Fig. 11 is a view showing a tongue plate stopper for use in a seat belt according to another embodiment.
[Fig. 12] Fig. 12 is a view showing a tongue plate stopper for use in a seat belt according to another embodiment.
[Fig. 13] Fig. 13 is a view showing a tongue plate stopper for use in a seat belt according to another embodiment.
[Fig. 14] Fig. 14 is a view showing a tongue plate stopper for use in a seat belt according to another embodiment.
[Fig. 15] Fig. 15 is a view showing a tongue plate stopper for use in a seat belt according to another embodiment.
[Fig. 16] Fig. 16 is a view showing a tongue plate stopper for use in a seat belt according to another embodiment.
[Fig. 17] Fig. 17 is a view showing a tongue plate stopper for use in a seat belt according to another embodiment.
[Fig. 18] Fig. 18 is a view showing a tongue plate stopper for use in a seat belt according to another embodiment.
[Fig. 19] Fig. 19 is a view showing a tongue plate stopper for use in a seat belt according to another embodiment.
[Fig. 20] Fig. 20 is a view showing a conventional tongue plate stopper for use in a seat belt.
[Fig. 21] Fig. 21 is a view showing the conventional tongue plate stopper for use in the seat belt.

### Best Mode for Carrying Out the Invention

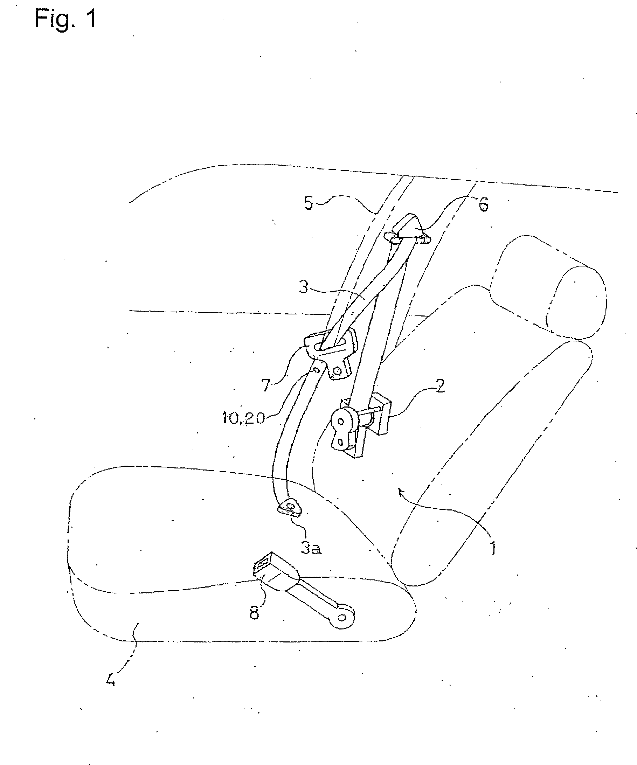

Hereinbelow, a best mode for carrying out the present invention will be explained referring to the drawings. Fig. 1 is a view schematically showing an example of an embodiment of a seat belt apparatus provided with tongue plate stoppers, 10 and 20, for use in a seat belt with respect to the present invention.

As shown in Fig. 1, a seat belt apparatus 1 in this example is composed of a seat belt retractor 2 fixed to a B-pillar of a vehicle body (not shown) or the like, a seat belt webbing 3 being pulled out from the seat belt retractor 2, and a belt anchor 3a at a tip end of which is fixed to a floor of the vehicle body or a motor vehicle seat 4, a guide anchor 6 for use in a seat belt being provided on, for example, a vehicle body, a motor vehicle seat 4, or the like (a center pillar 5 in the illustration), and guiding the seat belt webbing 3 that is pulled out from the seat belt retractor 2 to a shoulder of an occupant (not shown) (hereinafter this guide anchor 6 is explained to be provided on the center pillar 5, in this example), a tongue plate 7 slidably supported by the seat belt webbing 3 being guided from the guide anchor 6 for use in the seat belt, a buckle 8 fixed to the floor of the vehicle body or the motor vehicle seat 4 (the motor vehicle seat 4 in the illustration) while the tongue plate 7 is disengageably inserted and engaged therewith, and tongue plate stoppers, 10 and 20, for preventing the tongue plate 7 from dropping off up to a bottom at a time of nonuse of the seat belt.

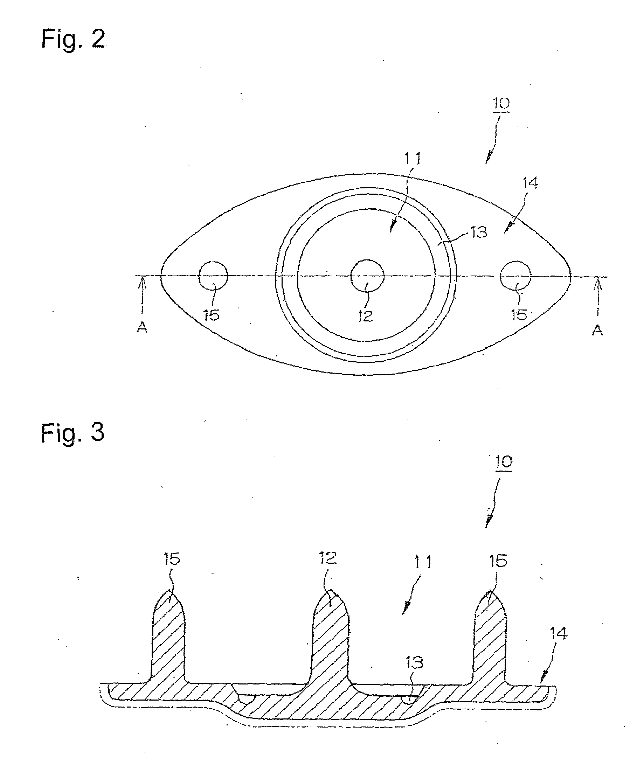

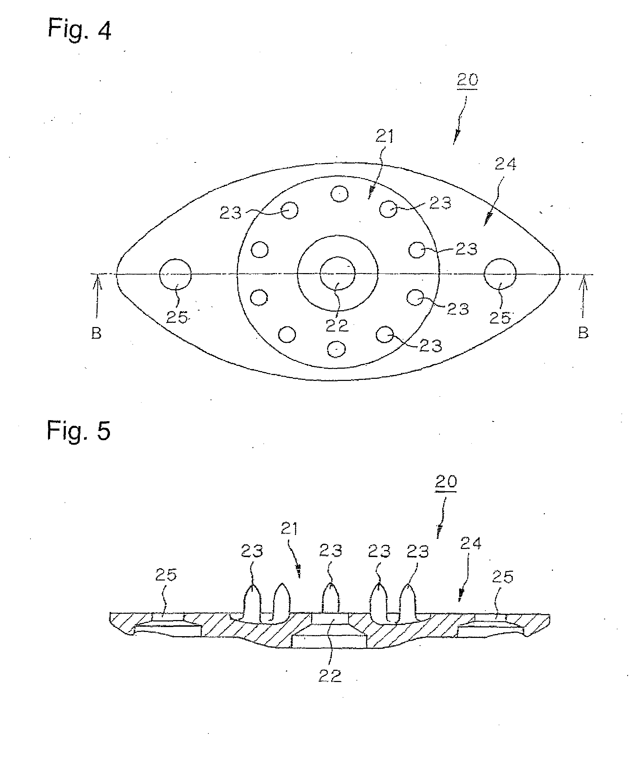

Figs. 2 through 5 are showing an embodiment of the tongue plate stoppers, 10 and 20, for use in the seat belt with respect to the present invention. Fig. 2 is a plan view showing a first member 10, Fig. 3 is a cross-section showing the first member 10, Fig. 4 is a plan view showing a second member 20, and Fig. 5 is a cross-section showing the second member 20.

In Figs. 2 and 3, a numeral 10 denotes a first member, a numeral 11 denotes a first center portion, a numeral 12 denotes a first pin constituting a pin, a numeral 13 denotes a peripheral groove portion, a numeral 14 denotes a first peripheral edge portion, and a numeral 15 denotes a second pin constituting the pin. The first member 10 is a plate-shaped member including the first center portion 11 having a round shape when looking at a plain view, and the first peripheral edge portion 14 having approximately elliptically shaped outer periphery, being located at a peripheral edge of the first center portion 11, and being provided with a step in relation to the first center portion 11 when looking at a side view. The first member 10 is preferable to be formed from resin. The first pin 12 having a round shaped cross-section vertically extending from the first center portion 11 is protruded at a center of the first center portion 11. Further, the peripheral groove portion 13 is provided in the vicinity of a border between the periphery of the first center portion 11 and the first peripheral edge portion 14. In the first peripheral edge portion 14, the second pins 15 that are vertically extending from the first peripheral edge portion 14 are provided at both sides of the first pin 12 in a manner so as to be positioned on approximately straight line with the first pin 12 when looking at a plain view.

In Figs. 4 and 5, the numeral 20 denotes the second member, a numeral 21 denotes the second center portion, a numeral 22 denotes a first hole constituting a hole, a numeral 23 denotes a protrusion, a numeral 24 denotes a second peripheral edge portion, and a numeral 25 denotes a second hole constituting a hole. The second member 20 is a plate-shaped member including the round shaped second center portion 21 when looking at a plain view, and the second peripheral edge portion 24 having approximately elliptically shaped outer periphery, being located at a peripheral edge of the second center portion 21, and is preferable to be formed from resin. In the second central portion 21, the first hole 22 is penetrated at a center thereof, a concave portion is provided in the vicinity of a border between the periphery of the first center portion 21 and the second peripheral edge portion 24, and projections 23 are circularly provided in the concave portion. In the second peripheral edge portion 24, second holes 25 are provided at both sides of the first hole 22 in a manner so as to be positioned on approximately straight line with the first hole 22 when looking at a plain view. Incidentally, it is sufficient to provide the holes, 22 and 25 at positions in alignment with positions of the pins, 12 and 15 of the first member 10, respectively.

At this moment, it is preferable to set a distance from the center of the first center portion 11 of the first member 10 to each of centers of the second pins 15 to be identical of a distance from a center of the second center portion 21 of the second member 20 to each of the centers of the second holes 25. Further, it is preferable to set a distance from a center of the first center portion 11 of the first member 10 to a center of a groove of the peripheral groove portion 13 to be identical of a distance from a center of the second center portion 21 of the second member 20 to a center of the protrusion 23.

Further, it is preferable to set a diameter of the first pin 12 of the first member 11 to be identical of an inner diameter of a portion of the first hole 22 of the second member 20 having the least diameter, and to set a diameter of the second pin 15 of the first member 11 to be identical of an inner diameter of a portion of the second hole 25 of the second member 20 having the least diameter. In addition, it is preferable to form the peripheral groove portion 13 of the first member 11 to have a size for a tip end of the protrusion 23 of the second member to be inserted.

Incidentally, the first center portion 11, the peripheral groove portion 13, and the first peripheral edge portion 14, and the second center portion 21, the protrusion 23, and the second peripheral edge portion 24 are not always necessary to be provided.

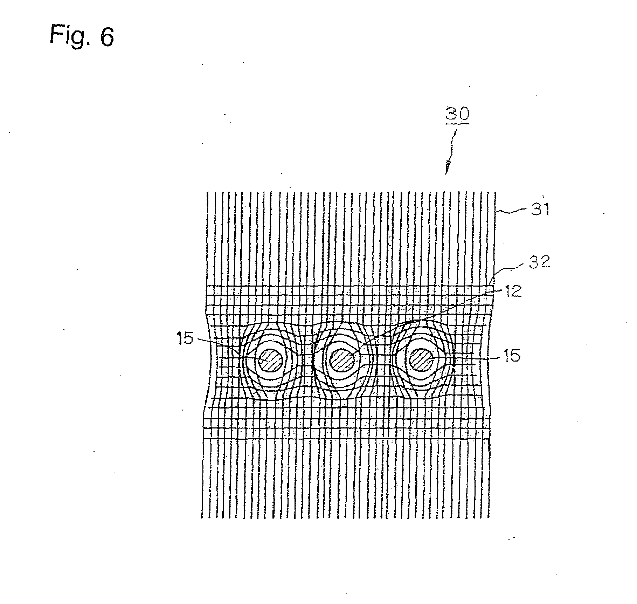

Fig. 6 is showing a condition of the first pin 12, the second pin 15, a warp 31, and a weft 32 of a seat belt webbing 30, in a case that the seat belt webbing 30 is sandwiched by the first member 10 and the second member 20 from both faces of the seat belt webbing 30. In the drawing, the numeral 30 denotes the seat belt webbing, the numeral 31 denotes the warp, and the numeral 32 denotes the weft. The first pin 12 of the first member 10 is fitted into the first hole 22 of the second member 20, and the second pin 15 of the first member 10 is fitted into the second hole 25 of the second member 20, after respectively penetrating through a gap between the warps 31, and that between the wefts 32 of the seat belt webbing 30.

In this case, the warp 31 and the weft 32 of the seat belt webbing 30 used at a uniform length are expanded by each of the pins, 12 and 15, and each of the warp 31 and the weft 32 around each of the pins, 12 and 15, is brought to a state to have a constricted length in relation to the warp 31 and the weft 32 in an ordinary state, by an extent of that each of the warp 31 and the weft 32 around each of the pins, 12 and 15, wraps around each of the pins, 12 and 15. As for the warp 31, because the warp 31 is brought to the state to have the constricted length by each of the pins, 12 and 15, the seat belt webbing 30 is brought to the state to be entirely constricted in a longitudinal direction, there is no possibility that a corrugating phenomenon occurs. Further, as for the weft 32, although the weft 32 is brought to a state to have a constricted length by each of the pins, 12 and 15, similar to a case of the warp 31, a hollow is suppressed not to become large. This is because the constriction in a width direction of the aforementioned weft 32 gets balanced out in the vicinity of an end portion in a width direction of the seat belt webbing 30, by the warp 31 being expanded by the second pin 15 in a width direction.

Incidentally, a position of the seat belt webbing 30, through which each pin penetrates, is preferable to be configured such that a distance from an end portion in a width direction of a belt to a center of the outside second pin 15 is set to be from about 3 to about 10 mm, when a belt width is defined as 47 mm. Specifically, it is more preferable to set a distance from an end portion in a width direction of the seat belt webbing 30 to the center of the outside second pin 15 to be 8.5 mm, and a distance between each of the centers of the second pins 15 at outsides to be 30 mm. Further, although the drawing is made in a manner such that a space is formed between each of the pins, 12 and 15, and the warp 31 and the weft 32 for ease of understanding, no space is formed in practice, or little space is formed even if some space is formed.

Further, a tip end of the protrusion 23 of the second member 20 is pressed into the peripheral groove portion 13 of the first member 10, and the tip end of the protrusion 23 enters a gap between the warp 31 and the weft 32 of the seat belt webbing 30 resulting in entering the peripheral groove portion 13. Furthermore, in a case that the gap between the warp 31 and the weft 32 of the seat belt webbing 30 is relatively large, the tip end of the protrusion 23 passes through the gap between the warp 31 and the weft 32, and enters the peripheral groove portion 13. Accordingly, weight of the tongue plate 7 applied to the tongue plate stoppers, 10 and 20, is dispersed in a wide area of the first member 10 and the second member 20. As a result, a load becomes not to be concentrated to only the weft 32 passing through downside of each of the pins, 12 and 15, and attaching strength becomes strong.

By means of forming a structure described above, a plurality of pins, 12 and 15 are penetrated from one side of the seat belt webbing 30, and the aforementioned pins, 12 and 15, are penetrated into a plurality of respectively corresponding holes, 22 and 25, at the other side of the aforementioned seat belt webbing 30. Thus, the seat belt webbing 30 is sandwiched.

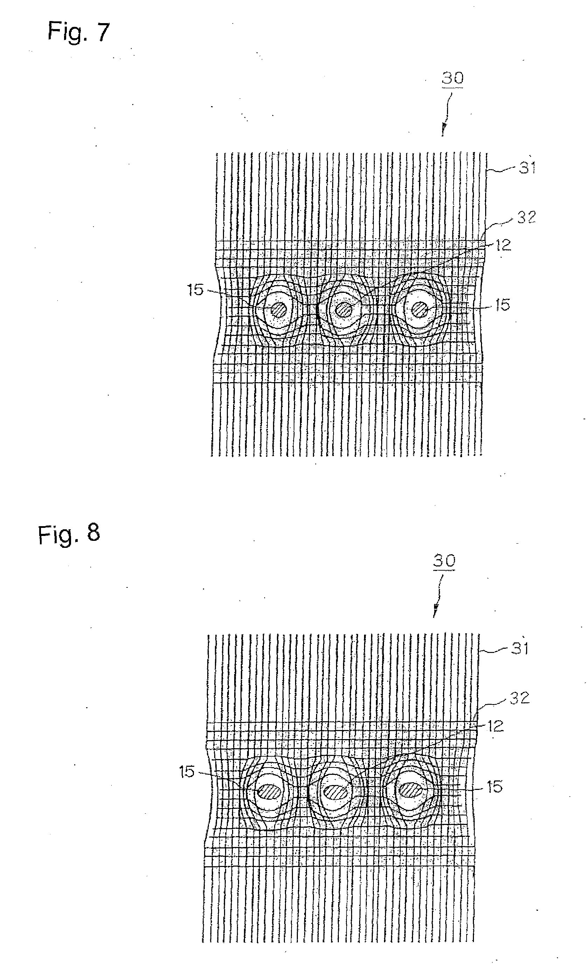

Figs. 7 through 10 are showing a condition of the first pin 12, the second pin 15, and the warp 31 and the weft 32 of the seat belt webbing 30 in another embodiment in which a size and a cross-sectional shape of the pin is changed. Fig. 7 is showing an embodiment in which a diameter of the first pin 12 and the second pin 15 is reduced. By means of reducing the diameter of each of the pins, 12 and 15, a distance of each of the warp 31 and the weft 32 that wraps around each of the pins, 12 and 15, is reduced, and the hollow can thereby be formed to be smaller.

Fig. 8 is showing an embodiment in which a cross-sectional shape of each of the first pin 12 and the second pin 15 is formed to be an ellipse. By means of forming the shape of the first pin 12 and the second pin 15 to be an ellipse, a width of displacement of the weft 32 can be reduced, and the hollow can thereby be formed to be smaller.

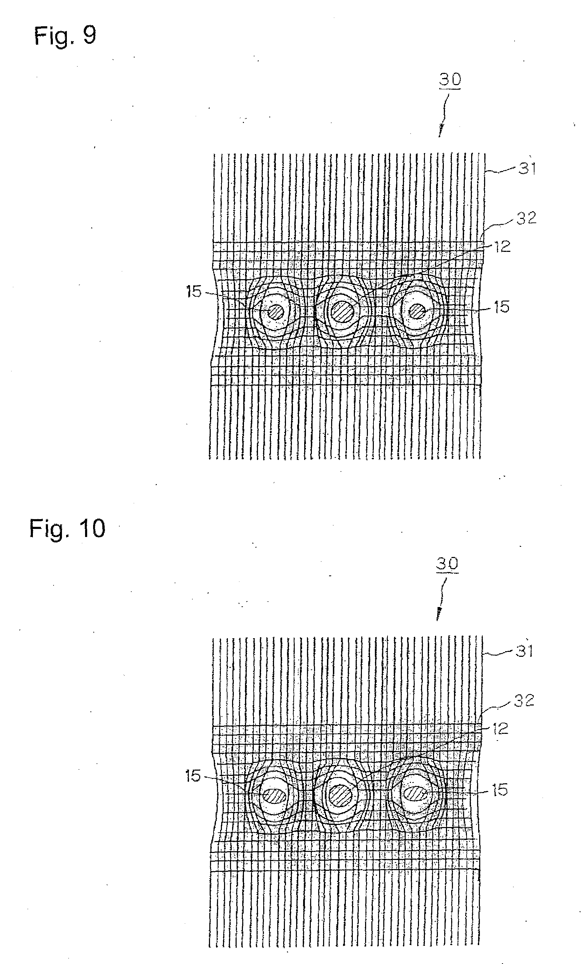

Fig. 9 is showing an embodiment in which the diameter of the second pin 15 is formed to be smaller than that of a cross-section of the first pin 12. By means of forming the diameter of the second pin 15 to be smaller than that of the first pin 12, the distance of the warps 31 and that of the wefts 32 wrapping around the second pin 15 are reduced by means of reducing the diameter of the second pin 15, while securing high strength for joining the first member 10 with the second member 20 as it is, by means of the first pin 12 having a large diameter. The hollow can thereby be formed to be smaller.

Fig. 10 is showing an embodiment in which a cross-sectional shape of the second pin 15 is formed to be an ellipse. By means of forming the shape of the second pin 15 to be an ellipse, the width of displacement of the weft 32 in relation to the second pin 15 is reduced, while securing high strength for joining the first member 10 with the second member 20 as it is, by means of the first pin 12 having a large diameter, by means of forming the shape of the second pin 15 to be an ellipse. The hollow can thereby be formed to be smaller.

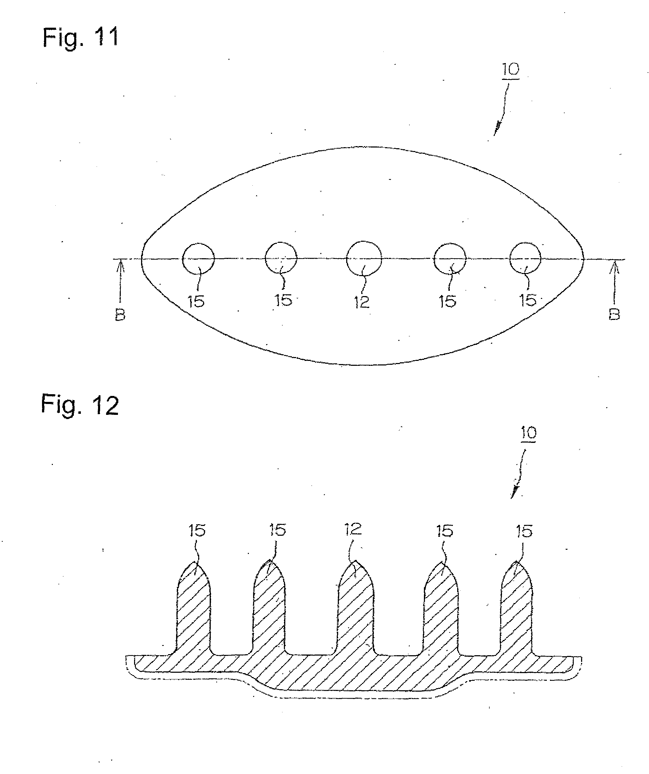

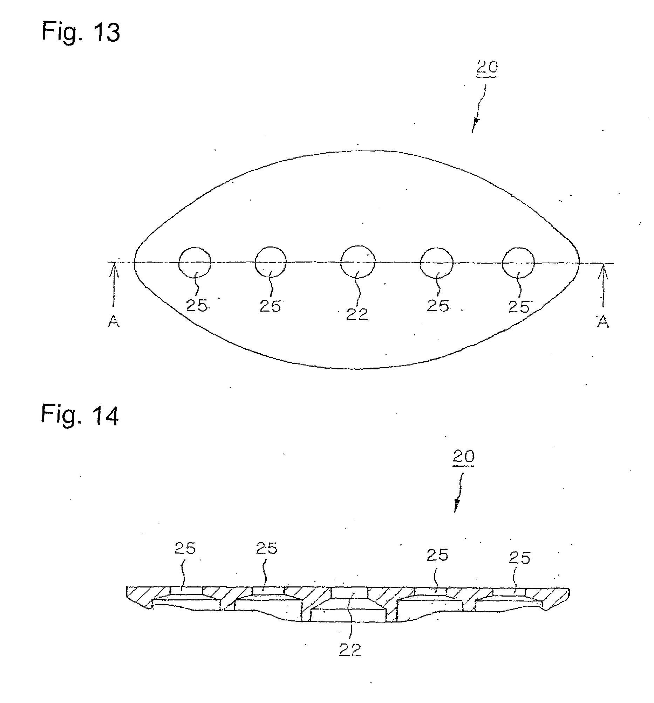

Next, Figs. 11 through 14 are showing an embodiment in which the number of the second pin 15 is increased. Figs. 11 and 12 are views showing the first member 10 provided with four second pins 15. Incidentally, in the present embodiment, the first center portion 11, the peripheral groove portion 13, and the first peripheral edge portion 14 are not provided, however the same can be provided without being accompanied by any problems. Figs. 13 and 14 are views showing the second member 20 provided with four second holes 25 in conjunction with the first member 10 shown in Figs. 11 and 12. Incidentally, in the present embodiment, the second center portion 21, the protrusion 23, and the second peripheral portion 24 are not provided, however the same can be provided without being accompanied by any problems.

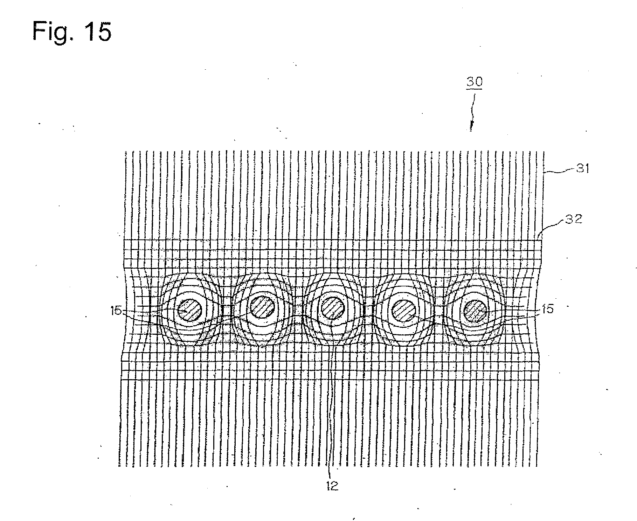

Fig. 15 is showing a condition of the first pin 12, the second pin 15, the warp 31 and the weft 32 of the seat belt webbing 30 in a case that the seat belt webbing 30 is sandwiched by the first member 10 and the second member 20 from both faces of the seat belt webbing 30.

In this case, similar to the case of three pins shown in Fig. 6, the warp 31 and the weft 32 of the seat belt webbing 30 used at a uniform length are expanded by each of the pins, 12 and 15, and each of the warp 31 and the weft 32 around each of the pins, 12 and 15, is brought to a state to have a constricted length in relation to the warp 31 and the weft 32 in an ordinary state, by an extent of that each of the warp 31 and the weft 32 around each of the pins, 12 and 15, wraps around each of the pins, 12 and 15. As for the warp 31, because the warp 31 is brought to the state to have the constricted length by each of the pins, 12 and 15, the seat belt webbing 30 is brought to the state to be entirely constricted in a longitudinal direction, there is no possibility that a corrugating phenomenon occurs. Further, as for the weft 32, although the weft 32 is brought to a state to have a constricted length by each of the pins, 12 and 15, similar to a case of the warp 31, the hollow is suppressed not to become large. This is because the constriction in the width direction of the aforementioned weft 32 gets balanced out in the vicinity of an end portion in the width direction of the seat belt webbing 30 by the warp 31 being expanded by the second pin 15 in the width direction.

Furthermore, the position where each pin penetrates through the seat belt webbing 30 is preferable to be configured such that the distance from the end portion in the width direction of the belt to the center of the second pin 15 at an outermost side is set to be from about 3 to about 10 mm, when the belt width is defined as 47 mm, similar to the case of the three pins shown in Fig. 6. Specifically, it is more preferable to set the distance from the end portion in the width direction of the seat belt webbing 30 to the center of the second pin 15 at the outermost side to be 8.5 mm, and the distance between each of the centers of the second pins 15 at the outermost side of both sides to be 30 mm. Further, although the drawing is made in the manner such that the space is formed between each of the pins, 12 and 15, and the warp 31 and the weft 32 for ease of understanding, no space is formed in practice, or little space is formed even if some space is formed.

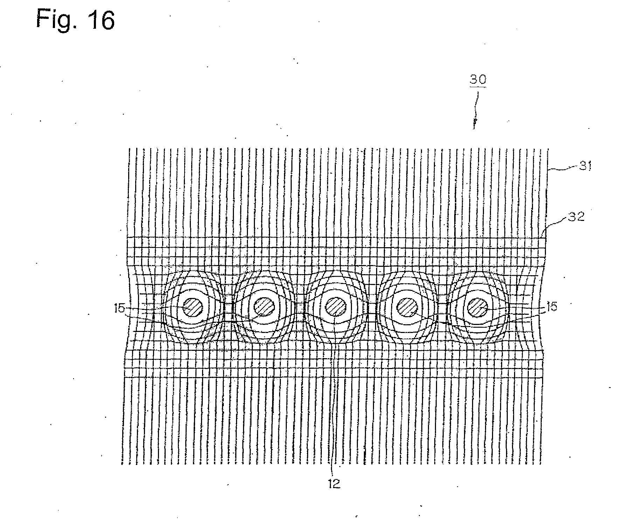

Figs. 16 through 19 is showing a condition of the first pin 12, the second pin 15, and the warp 31 and the weft 32 of the seat belt webbing 30, in a case of another embodiment in which a size or a cross-sectional shape of the pin is changed. Fig. 16 is showing an embodiment in which a diameter of the cross-section of the first pin 12 and the second pin 15 is reduced. By means of reducing the pin-diameter of each of pins, 12 and 15, the distance of the warp 31 and that of the weft 32 that wrap around each of the pins 12 and 15 are reduced and the hollow can thereby be formed to be smaller.

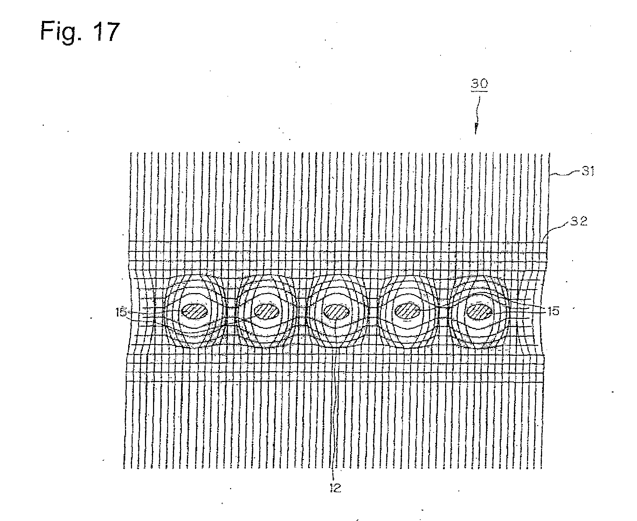

Fig. 17 is showing an embodiment in which the cross-sectional shape of the first pin 12 and that of the second pin 15 are formed to be an ellipse. By means of forming the shape of the first pin 12 and the second pin 15 to be the ellipse, the width of displacement of the weft 32 can be reduced, and the hollow can thereby be formed to be smaller.

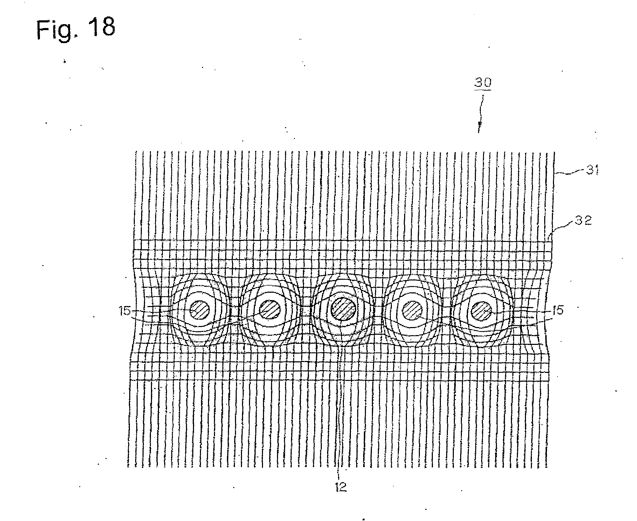

Fig. 18 is showing an embodiment in which the diameter of the cross-section of the second pin 15 is formed to be smaller than that of the first pin 12. By means of forming the diameter of the second pin 15 to be smaller than that of the first pin 12, the distance of the warp 31 and that of the weft 32 wrapping around the second pin 15 are reduced by means of reducing the diameter of the second pin 15, while securing high strength for joining the first member 10 with the second member 20 as it is, by means of the first pin 12 having a large diameter. The hollow can thereby be formed to be smaller.

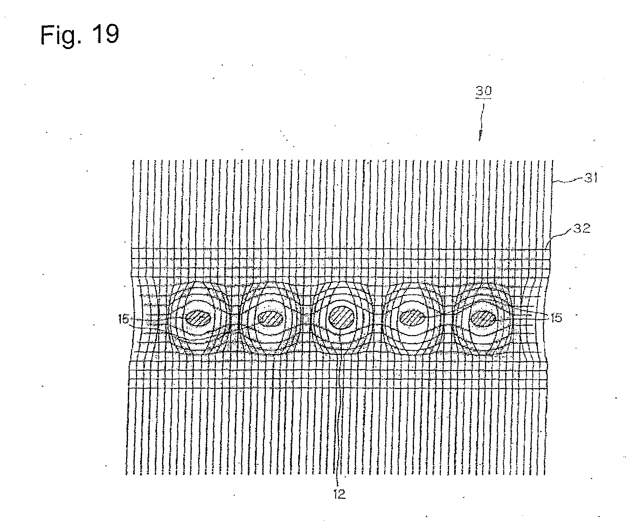

Fig. 19 is showing an embodiment in which the cross-sectional shape of the second pin 15 is formed to be an ellipse. By means of forming the shape of the second pin 15 to be the ellipse, the width of displacement of the weft 32 in relation to the second pin 15 is reduced, while securing high strength for joining the first member 10 with the second member 20 as it is, by means of the first pin 12 having a large diameter by means of forming the shape of the second pin 15 to be the ellipse, and the hollow can thereby be formed to be smaller.

Incidentally, although one first pin 12 is provided at the center, it is not always necessary to provide the first pin 12 at the center, and as an embodiment which is not shown, a total of the number of the pins, 12 and 15, may be configured to be an even number by means of providing two first pins 12, and a plurality of second pins 15 at an outside thereof. At this moment, it is more preferable to configure intervals between each of the pins, 12 and 15, to be identical. In addition, in this case, the position where each pin penetrates through the seat belt webbing 30 is preferable to be configured such that the distance from the end portion in the width direction of the belt to the center of the second pin 15 at an outermost side is set to be from about 3 to about 10 mm, when the belt width is defined as 47 mm. Specifically, it is more preferable to set the distance from the end portion of the seat belt webbing 30 to the center of the second pin 15 at the outermost side to be 8.5 mm, and the distance between each of the centers of the second pins 15 at the outermost side of both sides to be 30 mm.

Further, as another embodiment which is not shown, the tongue plate stoppers, 10 and 20, may be constructed by penetrating a plurality of the aforementioned pins, 12 and 15, through a plurality of the aforementioned, holes, 22 and 25, corresponding thereto by means of respectively lining a plurality of the first members 10 provided with at least one pin 12 and one pin 15, and a plurality of the second members 20 provided with at least one hole 22 and one hole 25. At this moment, absence of the second pin 15 and the second hole 25 may be allowed. Further, it is more preferable to provide a pin 12 having a small diameter at an outside in the width direction of the seat belt webbing 30.

Furthermore, even in the case of the aforementioned embodiment which is not shown, the first pine 12, the second pin 15, the first hole 22, and the second hole 25 may be constructed in a combination described in the embodiment and that of various sizes and shapes other than described.

The hollow of the seat belt webbing 30 is suppressed not to become large, and no possibility for a corrugating phenomenon to occur remains by means of applying the tongue plate stoppers, 10 and 20 of the present embodiment, penetrating a plurality of pins, 12 and 15, through the seat belt webbing 30 from one side thereof, penetrating the aforementioned pins, 12 and 15, through a plurality of the holes, 22 and 25, at the other side of the aforementioned seat belt webbing 30, and sandwiching the seat belt webbing 30, as described above.

### Industrial Applicability

A tongue plate stopper for use in a seat belt according to the present invention and a seat belt apparatus provided with the same can preferably be utilized to a seat belt apparatus attached to a motor vehicle for restraining and protecting an occupant by means of a seat belt in emergency.

## Claims

1. A tongue plate stopper for use in a seat belt for preventing a tongue plate from sliding down to the bottom of the seat belt at a time of nonuse of the seat belt, comprising:
a first member including a pin penetrating a seat belt webbing; and
a second member including a hole through which the pin penetrates the seat belt webbing;
wherein a plurality of the pins penetrate through a plurality of the holes corresponding thereto, and
wherein the seat belt webbing is sandwiched between the first member and the second member.

2. The tongue plate stopper for use in the seat belt according to Claim 1, wherein a cross section of the pin is formed to be circular.

3. The tongue plate stopper for use in the seat belt according to Claim 1, wherein a cross section of the pin is formed to be an ellipse.

4. The tongue plate stopper for use in the seat belt according to Claim 1, wherein the pin includes a pin located in the center in a width direction of the seat belt webbing, the pin having a rounded cross section, and a pin located to the outside thereof having an elliptical cross section.

5. The tongue plate stopper for use in the seat belt according to Claim 1, wherein the pin comprises a pin located to the outside of a central pin in the width direction of the seat belt webbing, having a diameter smaller than that of the central pin.

6. A seat belt apparatus, at least comprising:
a seat belt for restraining an occupant in an emergency;
a seat belt retractor for retracting the seat belt;
a guide anchor for use with the seat belt, guiding the seat belt from the seat belt retractor to an area near a shoulder of the occupant;
a tongue plate slidably supported by the seat belt being guided from the guide anchor for use with the seat belt;
a buckle into which the tongue plate can be disengageably inserted and engaged; and
a tongue plate stopper for preventing the tongue plate from sliding down to the bottom of the seat belt at a time of nonuse of the seat belt,
wherein the tongue plate stopper for use in the seat belt is the tongue plate stopper for use in the seat belt according to Claim 1.
